# EUROPÄISCHE PATENTSCHRIFT

(11) **EP 3 501 916 B1**
(45) Veröffentlichungstag und Bekanntmachung des Hinweises auf die Patenterteilung: **05.05.2021**
(21) Anmeldenummer: 18207826.1
(22) Anmeldetag: 22.11.2018
(51) Int. Cl.: B60R 25/24, B60R 11/00, G08B 13/14

(54) **VERFAHREN ZUM BETREIBEN EINES FUNKBASIERTEN ÜBERWACHUNGSSYSTEMS EINES KRAFTFAHRZEUGS SOWIE ÜBERWACHUNGSSYSTEM UND TAGEINHEIT FÜR DAS ÜBERWACHUNGSSYSTEM**
METHOD FOR OPERATING A RADIO MONITORING SYSTEM OF A MOTOR VEHICLE AND MONITORING SYSTEM AND TAG UNIT FOR MONITORING SYSTEM
PROCÉDÉ DE FONCTIONNEMENT D'UN SYSTÈME DE SURVEILLANCE RADIO D'UN VÉHICULE AUTOMOBILE AINSI QUE SYSTÈME DE SURVEILLANCE ET RÉPONDEUR POUR LE SYSTÈME DE SURVEILLANCE

(30) Priorität: 21.12.2017 DE 102017223564
(43) Veröffentlichungstag der Anmeldung: 26.06.2019
(73) Patentinhaber: VOLKSWAGEN AKTIENGESELLSCHAFT, 38440 Wolfsburg (DE)
(72) Erfinder: Ette, Bernd, 38442 Wolfsburg (DE)

(56) Entgegenhaltungen:
- DE-A1- 10 014 207
- DE-A1- 10 344 583
- DE-A1- 19 747 732
- DE-A1-102005 062 455
- DE-A1-102012 213 792
- DE-A1-102016 007 410
- US-A1- 2017 236 351

## Beschreibung

Die Erfindung betrifft ein Verfahren zum Betreiben eines funkbasierten Überwachungssystems eines Kraftfahrzeugs. Mittels des Überwachungssystems kann das Kraftfahrzeug gegen einen Diebstahl eines Gegenstands aus dem Kraftfahrzeug und/oder gegen ein unautorisiertes Entriegeln des Kraftfahrzeugs geschützt werden. Zu der Erfindung gehört auch das Überwachungssystem.

Zum Schützen eines Kraftfahrzeugs gegen ein unautorisiertes Entriegeln sind aus dem Stand der Technik zahlreiche Maßnahmen bekannt.

Aus der DE 11 2014 006 819 T5 ist ein Verfahren bekannt, um bei einem Kraftfahrzeug mittels eines UWB-Funksignals (UWB - Ultra White Band) den Abstand zwischen dem Kraftfahrzeug und einem Funkschlüssel in der Umgebung des Kraftfahrzeugs zu ermitteln. Aus der DE 10 2016 007 410 A1 ist ein Schließsystem mit einem Keyless-Go-Funkschlüssel bekannt.

Aus der DE 10 2013 010 993 A1 ist ein Kraftfahrzeug bekannt, das einen auswärts gerichteten Radarsensor aufweist, der mit seinem Radarsignal den Abstand zwischen dem Kraftfahrzeug und einem Fahrzeugnutzer oder einem anderen Objekt in der rückwärtigen Umgebung des Kraftfahrzeugs ermittelt. In Abhängigkeit von dem Radarsignal wird eine Heckklappe des Kraftfahrzeugs angesteuert.

Das Bereitstellen oder das Nachrüsten eines Überwachungssystems in einem Kraftfahrzeug zum Schutz von Gegenständen gegen Diebstahl kann technisch sehr aufwendig sein (siehe DE10344583A). Auch das Schützen des Kraftfahrzeugs selbst vor einer nicht-autorisierten Entriegelung von dessen Zentralverriegelung mittels eines manipulierten Funkschlüssels erfordert einen technischen Aufwand, der aufwendige und kostspielige Nachrüstmaßnahmen mit sich bringt. Der Erfindung liegt die Aufgabe zugrunde, in einem Kraftfahrzeug ein Überwachungssystem bereitzustellen, das einen geringen Installationsaufwand erfordert.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Betreiben eines funkbasierten Überwachungssystems eines Kraftfahrzeugs bereitgestellt. Die Art und Weise, wie das Überwachungssystem betrieben werden kann, stellt sicher, dass das Überwachungssystem auch dann sicher ist, wenn es mit geringem Installationsaufwand nachgerüstet wurde. Durch das Überwachungssystem werden hierzu eine zentrale Steuereinheit und mehrere mobile, portable Sendeeinheiten bereitgestellt. Im Folgenden wird als synonyme Bezeichnung für eine "Sende- und Empfangseinheit" der kürzere Begriff "Tageinheit" verwendet. Die zentrale Steuereinheit kann z.B. als ein Bestandteil einer der Tageinheiten oder durch eine separate Komponente, beispielsweise durch ein Steuergerät des Kraftfahrzeugs oder ein Infotainmentsystem (Informations-Unterhaltungssystem) des Kraftfahrzeugs realisiert sein.

Bei dem Verfahren werden die Tageinheiten in dem Kraftfahrzeug durch eine jeweilige Halteeinrichtung gehalten. Jede Halteeinrichtung ist eine mechanische Halterung, die in dem Kraftfahrzeug zum Befestigen oder Anordnen der Tageinheiten vorgesehen ist. Jede Halteeinrichtung weist jeweils eine mechanische Codierung auf, durch welche eine räumliche Orientierung der gehaltenen Tageinheit festgelegt wird. Möchte man also eine Tageinheit in eine Halteeinrichtung einsetzen oder mit dieser verbinden, so erzwingt die mechanische Codierung, dass dies nur vollendet oder durchgeführt werden kann, wenn die Tageinheit die durch die mechanische Codierung erzwungene räumliche Orientierung aufweist oder innehat. Jede Halteeinrichtung weist dabei eine andere mechanische Codierung auf und erzwingt somit eine andere räumliche Orientierung der gehaltenen Tageinheit. Mit anderen Worten ist die räumliche Orientierung der gehaltenen Tageinheit für die Halteeinrichtung in dem Kraftfahrzeug charakteristisch oder spezifisch oder eindeutig. Da jede Halteeinrichtung eine andere Einbauposition in dem Kraftfahrzeug hat (z.B. vorne recht, hinten links), ist auch die räumliche Orientierung der gehaltenen Tageinheit für die Einbauposition in dem Kraftfahrzeug charakteristisch.

Anhand der räumlichen Orientierung der gehaltenen Tageinheit kann also erkannt werden, in welcher Halteeinrichtung sich die Tageinheit befindet, was gleichbedeutend ist mit der Tatsache, dass sich die Tageinheit an einer bestimmten, bekannten Einbauposition im Kraftfahrzeug befindet. Bei dem Verfahren ermittelt entsprechend jede Tageinheit mittels einer eigenen Lagesensoreinrichtung ihre räumliche Orientierung und damit ihre Eigenposition in dem Kraftfahrzeug. Die Eigenposition stimmt mit der Einbauposition der Halteeinrichtung überein, durch welche die jeweilige Tageinheit gehalten wird. Jede Tageinheit signalisiert dann die von ihr ermittelte Eigenposition an die zentrale Steuereinheit per Funk.

In einem Überwachungsmodus des Überwachungssystems erfasst jede Tageinheit dann mittels einer eigenen Abstandsmesseinrichtung wiederholt einen Abstand zu zumindest einem vorbestimmten Objekt. Die Abstandsmesseinrichtung kann den Abstand auf der Grundlage zumindest eines Funksignals und/oder auf der Grundlage von Ultraschall und/oder Radar und/oder Infrarotstrahlung und/oder Licht ermitteln. Jede Tageinheit signalisiert den von ihr erfassten jeweiligen Abstand des zumindest einen Objekts an die zentrale Steuereinheit per Funk. Somit ist in der zentralen Steuereinheit auch die Relativlage des zumindest einen vorbestimmten Objekts zu den Tageinheiten bekannt. Die Relativlage ist insbesondere in Form des Abstands beschrieben. Die zentrale Steuereinheit ermittelt dann eine jeweilige Objektposition des zumindest einen Objekts auf der Grundlage der jeweiligen Eigenposition zumindest einer oder zumindest einiger der Tageinheiten (es müssen also nicht alle Tageinheiten genutzt werden) und auf der Grundlage der jeweils von dieser Tageinheit oder diesen Tageinheiten signalisierten Abstände. Ausgehend von der jeweiligen Eigenposition der Tageinheiten kann aufgrund der erfassten Abstände zu dem zumindest einen Objekt beispielsweise auf der Grundlage einer Trilateration dessen Objektposition ermittelt werden. Die Objektposition kann aber auch weniger genau als einfacher Abstand zu der jeweiligen Tageinheit definiert sein, das heißt es wird nur gespeichert, welchen Abstand das zumindest eine Objekt jeweils zu den unterschiedlichen Eigenpositionen der Tageinheiten aufweist. Eine genaue Angabe von Koordinaten der Objektposition des zumindest einen Objekts ist für die Funktionsweise der Erfindung im Allgemeinen nicht notwendig.

Die zentrale Steuereinheit steuert dann in Abhängigkeit von der jeweils ermittelten Objektposition des zumindest einen Objekts zumindest eine vorbestimmte Sicherungsfunktion in dem Kraftfahrzeug. Wird also beispielsweise ein überwachtes Objekt in dem Kraftfahrzeug bewegt, so reagiert die zentrale Steuereinheit mit einer Ansteuerung zumindest einer Sicherungsfunktion. Genauso kann zumindest eine Sicherungsfunktion angesteuert werden, wenn sich ein bestimmtes Objekt dem Kraftfahrzeug nähert.

Durch die Erfindung ergibt sich der Vorteil, dass die Tageinheiten nachträglich in die Halteeinrichtungen des Kraftfahrzeugs eingesetzt oder in den Halteeinrichtungen angeordnet werden können und daraufhin zumindest ein Objekt in dem Kraftfahrzeug oder in einer Umgebung des Kraftfahrzeugs auf seine Objektposition hin überwacht werden kann und in Abhängigkeit von der Objektposition eine Sicherungsfunktion in dem Kraftfahrzeug gesteuert wird.

Zu der Erfindung gehören auch Ausführungsformen, durch die sich zusätzliche Vorteile ergeben.

Eine Ausführungsform sieht vor, dass die Objektposition eines portablen Zugangsberechtigungstransponders des Kraftfahrzeugs ermittelt wird. Mit anderen Worten stellt der Zugangsberechtigungstransponder ein überwachtes Objekt dar. Ein solcher Zugangsberechtigungstransponder kann beispielsweise ein Funkschlüssel oder ein mobiles Endgerät mit einer Funkschlüsselfunktion sein. Als die Sicherungsfunktion, die in Abhängigkeit von der Objektposition des Zugangsberechtigungstransponders gesteuert wird, werden eine Zentralverriegelungsanlage und/oder eine Wegfahrsperre des Kraftfahrzeugs gesteuert. Die Transpondereinheiten weisen hierzu bevorzugt eine Abstandsmesseinrichtung auf, die ein Funksignal für den Zugangsberechtigungstransponder in zwei entgegengesetzte Richtungen ausstrahlen können. Hierdurch kann mittels der Abstandsmesseinrichtung jederzeit sowohl ein Zugangsberechtigungstransponder innerhalb des Kraftfahrzeugs als auch in einer Umgebung des Kraftfahrzeugs, also außerhalb des Kraftfahrzeugs, per Funk erreicht und dessen Abstand ermittelt werden. Die Abstandsmesseinrichtung ist hierzu bevorzugt dazu ausgestaltet, den Abstand auf der Grundlage eines UWB-Funksignals (UWB - Ultra White Band, Ultra-Breitband) mittels einer Laufzeitanalyse zu ermitteln. Ein solches UWB-Funksignal weist insbesondere Frequenzen in einem Bereich von 500 Megahertz bis 15 Gigahertz auf. In Abhängigkeit von der Objektposition des Zugangsberechtigungstransponders kann somit beispielsweise die Zentralverriegelungsanlage verriegelt oder entriegelt werden und/oder die Wegfahrsperre des Kraftfahrzeugs verriegelt und/oder entriegelt wird.

Eine Ausführungsform hierzu sieht vor, dass die Steuerung der Sicherungsfunktion voraussetzt oder verlangt, dass sich der Zugangsberechtigungstransponder bei einem Startversuch zum Starten des Kraftfahrzeugs (Anlassen des Motors) innerhalb des Kraftfahrzeugs befinden muss. Hierdurch kann in vorteilhafter Weise erzwungen werden, dass nur dann das Kraftfahrzeug gestartet werden kann, wenn der Fahrer oder ein Benutzer des Kraftfahrzeugs sich mittels des Zugangsberechtigungstransponders autorisiert und dieser im Kraftfahrzeug mitfährt. Die Steuerung der Sicherungsfunktion kann zusätzlich oder alternativ dazu voraussetzen oder verlangen, dass sich der Zugangsberechtigungstransponder bei einem Öffnungsversuch zum Öffnen des Kraftfahrzeugs (beispielsweise bei einer Betätigung eines Türgriffs oder eines Kofferraumdeckels des Kraftfahrzeugs) in einem vorbestimmten Umgebungsbereich um das Kraftfahrzeug befinden muss. Beispielsweise kann festgelegt sein, dass sich der Zugangsberechtigungstransponder in einem Umgebungsbereich befinden muss, der an das Kraftfahrzeug angrenzt und dessen Außengrenzen einen Abstand vom Kraftfahrzeug in einem Bereich von 2 m bis 20 m aufweist. Hierdurch kann in vorteilhafter Weise sichergestellt werden, dass sich die Zentralverriegelungsanlage nur dann selbstständig bei einem Öffnungsversuch entriegelt, wenn sich der Zugangsberechtigungstransponder in Sichtweite zum Kraftfahrzeug befindet oder sich der Träger des Zugangsberechtigungstransponders im Umgebungsbereich des Kraftfahrzeugs aufhält.

Eine Ausführungsform sieht vor, dass die Objektposition eines gegen Diebstahl aus dem Kraftfahrzeug zu schützenden Gegenstands ermittelt wird. Mit anderen Worten ist ein Objekt, das mittels des Überwachungssystems überwacht werden soll, der zu schützende Gegenstand. Der Gegenstand weist hierzu eine Transpondereinheit für eine Abstandsmessung auf. Durch die Abstandsmesseinrichtung jeder Tageinheit kann somit funkbasiert der Abstand zu der Transpondereinheit an dem Gegenstand ermittelt werden und daraus auf die Objektposition des Gegenstands selbst rückgeschlossen werden. Als die zugehörige Sicherungsfunktion kann eine Alarmanlage des Kraftfahrzeugs gesteuert werden. Hierdurch kann ein Alarm ausgelöst werden, wenn die Objektposition um mehr als einen vorbestimmten Toleranzwert verändert wird, d.h. wenn der Gegenstand bewegt wird. Somit kann die Alarmanlage angesteuert werden, wenn der Gegenstand beispielsweise von dem Kraftfahrzeug weg bewegt wird. Als Gegenstand kann beispielsweise jeweils ein Gepäckstück auf einem Dachgepäckträger des Kraftfahrzeugs und/oder ein Fahrrad auf einer Fahrradhalterung des Kraftfahrzeugs gesichert oder beobachtet oder überwacht werden. Die Alarmanlage kann vorsehen, dass ein akustischer Alarm ausgegeben wird. Zusätzlich oder alternativ dazu kann die Alarmanlage beispielsweise auch eine Nachricht an ein mobiles Endgerät eines Besitzers oder Benutzers des Kraftfahrzeugs, also beispielsweise an ein Smartphone, aussenden.

Eine Ausführungsform sieht vor, dass die jeweilige Objektposition zumindest einer der Tageinheiten selbst ermittelt wird. Mit anderen Worten wird durch zumindest eine Tageinheit der Abstand zu zumindest einer anderen Tageinheit ermittelt. Als ein Objekt wird also dann jeweils eine Tageinheit überwacht. Die zugehörige Sicherungsfunktion steuert eine Funktionsblockade zumindest einer vorbestimmten Funktion in dem Kraftfahrzeug. Hierdurch ergibt sich in vorteilhafter Weise ein Schutz gegen eine Manipulation der Anordnung der Tageinheiten in dem Kraftfahrzeug. Wird eine auf ihren Abstand überwachte Tageinheit aus der Halteeinrichtung in dem Versuch entnommen, beispielsweise das Überwachungssystem zu manipulieren, so wird dies anhand der Änderung des Abstands erkannt und die Funktionsblockade für die zumindest eine vorbestimmte Funktion ausgelöst. Wird das Überwachungssystem beispielsweise in der beschriebenen Weise zum Steuern einer Zentralverriegelungsanlage und/oder einer Wegfahrsperre mittels Zugangsberechtigungstransponder verwendet, so kann diese Funktion blockiert werden, wenn erkannt wird, dass die hierzu verwendete Tageinheiten bewegt oder manipuliert werden.

Eine Ausführungsform sieht in diesem Zusammenhang vor, dass dabei einer Änderung der Objektposition der zumindest einen Tageinheit um einen Betrag größer als ein vorbestimmter Toleranzwert daraufhin eine schlüssellose, funkbasierte Entriegelungsfunktion des Kraftfahrzeugs durch die Funktionsblockade deaktiviert wird. Somit ist also nicht mehr die sogenannte Keyless-Go-Funktion in dem Kraftfahrzeug verfügbar, falls die zum Erkennen des Funkschlüssels verwendete Anordnung aus Tageinheiten in ihrer Konstellation verändert wird. Hierdurch ist in vorteilhafter Weise ein Diebstahl des Kraftfahrzeugs verhindert.

Eine Ausführungsform sieht vor, dass jede der Tageinheiten durch ihre jeweilige Halteeinrichtung reversibel und zerstörungsfrei lösbar gehalten wird. Beispielsweise kann dies auf der Grundlage einer Schnappverbindung (sogenannte Klipse) realisiert werden. Die mechanische Codierung kann bei dem Überwachungssystem beispielsweise durch mindestens zwei Stifte oder Splinte in der Halteeinrichtung realisiert werden, auf welche die zu haltende Tageinheit aufgesteckt werden muss. Die lösbare Halterung der Tageinheiten weist den Vorteil auf, dass eine Tageinheit nachträglich installiert werden kann und/oder die Anzahl der verwendeten Tageinheiten variiert werden kann und/oder Tageinheiten für mehr als ein Kraftfahrzeug genutzt werden können.

In einer Ausführungsform ist vorgesehen, dass in jeder der Tageinheiten mittels eines eigenen Bewegungssensors ein Aktivitätszustand der jeweiligen Tageinheit geschaltet wird. Mit anderen Worten kann eine Tageinheit in Abhängigkeit von dem Bewegungssignal eines Bewegungssensors der Tageinheit eingeschaltet und/oder ausgeschaltet werden. Hierdurch kann bei einem Batteriebetrieb der Tageinheiten der Energieverbrauch reduziert werden, indem beispielsweise bei einer Bewegung der Tageinheit diese ausgeschaltet wird. Der Überwachungsmodus wird dann also nur im Stillstand des Kraftfahrzeugs, wenn eine Überwachung oder Sicherung des Kraftfahrzeugs nötig ist, aktiviert.

Eine Ausführungsform sieht vor, dass in den Halteeinrichtungen die dort jeweils enthaltene Tageinheit über elektrische Kontakte der Halteeinrichtung mit elektrischer Energie versorgt wird. Mit anderen Worten weist jede Halteeinrichtung beispielsweise zwei Elektroden auf (Plus-Pol und Minus-Pol), die beim Einsetzen oder Anordnen der Tageinheit in die Halteeinrichtung mit korrespondierenden Elektroden oder elektrischen Kontakten der Tageinheit in Berührung gebracht werden, sodass eine elektrische Spannung und ein elektrischer Strom zwischen der Halteeinrichtung und der Tageinheit ausgetauscht werden können. Die elektrischen Kontakte der Halteeinrichtungen können jeweils beispielsweise mit einem elektrischen Bordnetz des Kraftfahrzeugs elektrisch verbunden sein.

Eine Ausführungsform sieht vor, dass die Tageinheiten durch die Halteeinrichtungen in einem Innenraum des Kraftfahrzeugs gehalten werden. Somit ist in vorteilhafter Weise eine Demontage einer Tageinheit nur bei geöffnetem Kraftfahrzeug möglich. Mit dem Verriegeln des Kraftfahrzeugs werden also auch die Tageinheiten gegen eine Manipulation geschützt. Die Halteeinrichtungen können beispielsweise an den Säulen des Kraftfahrzeugs (A-Säule, B-Säule und/oder C-Säule) angeordnet sein.

Eine Ausführungsform sieht vor, dass durch das Überwachungssystem nur mechanisch identisch aufgebaute Tageinheiten bereitgestellt werden. Mit anderen Worten können die Tageinheiten beispielsweise eine identische Gehäuseform aufweisen. Hierdurch ergibt sich der Vorteil, dass jede Tageinheit mit jeder Halteeinrichtung kombinierbar ist.

Eine Ausführungsform sieht vor, dass zu Beginn einer Parkphase des Kraftfahrzeugs in Abhängigkeit von einem Verriegelungssignal, welches einen Verriegelungsvorgang des Kraftfahrzeugs signalisiert, wodurch also beispielsweise die Türen des Kraftfahrzeugs verriegelt sind, dann die jeweilige Eigenposition der Tageinheiten ermittelt und der Überwachungsmodus gestartet wird. Die Aktivierung des Überwachungssystems erfolgt also mit Verschließen des Kraftfahrzeugs beispielsweise mittels der Zentralverriegelung. Dann ist in vorteilhafter Weise sichergestellt, dass sich das Kraftfahrzeug in einem statischen Zustand befindet, also keine Veränderung der Eigenpositionen der Tageinheiten und/oder eines in dem Kraftfahrzeug zu überwachenden Gegenstands durch einen Benutzer vorkommen kann. Somit wird die Wahrscheinlichkeit für einen Fehlalarm des Überwachungssystems in vorteilhafter Weise verringert.

Eine Ausführungsform sieht vor, dass bei einem Datenaustausch zwischen den Tageinheiten einerseits und der zentralen Steuereinheit andererseits (beispielsweise zum Austauschen der beschriebenen Signale per Funk) jeweils eindeutige, für die jeweilige Tageinheit spezifische Identifikationsdaten als Senderkennung verwendet werden. Jede Tageinheit identifiziert sich also beim Signalisieren der Eigenposition und/oder des zumindest einen erfassten Objektabstands mittels der Identifikationsdaten. Hierbei ist dann vorgesehen, dass die jeweiligen Identifikationsdaten aus eindeutigen Tagidentifikationsdaten der jeweiligen Tageinheit und eindeutigen, für das Kraftfahrzeug spezifischen Fahrzeugidentifikationsdaten gebildet werden. Mit anderen Worten wird eine Kommunikation oder ein Datenaustausch nur dann autorisiert oder als gültig anerkannt, wenn die Tageinheit die korrekte Kombination aus Tagidentifikationsdaten und Fahrzeugidentifikationsdaten verwendet. Hierdurch ergibt sich eine Synchronisierung oder Koppelung der Tageinheiten mit dem Kraftfahrzeug. Wird das Signal einer Tageinheit in einem anderen Kraftfahrzeug empfangen, so wird dieses Signal von der zentralen Steuereinheit des anderen Kraftfahrzeugs ignoriert, weil die Identifikationsdaten nicht zu den Fahrzeugidentifikationsdaten dieses Kraftfahrzeugs passen. Hierdurch wird in vorteilhafter Weise eine Beeinflussung eines anderen Kraftfahrzeugs durch das Sendesignal einer Tageinheit vermieden.

Eine Ausführungsform sieht vor, dass die Identifikationsdaten durch die zentrale Steuereinheit für eine jeweilige Tageinheit nur vergeben werden, falls die Tageinheit eine räumliche Orientierung erfasst hat, welche mit der mechanischen Codierung einer der Halteeinrichtungen korrespondiert. Mit anderen Worten erhält die Tageinheit nur dann gültige Identifikationsdaten mit den darin enthaltenen Fahrzeugidentifikationsdaten, falls sie eine räumliche Orientierung ermitteln oder nachweisen konnte, die einen Hinweis darauf gibt, dass die Tageinheit in einer der Halteeinrichtungen angeordnet ist. Hierdurch wird in vorteilhafter Weise sichergestellt, dass nur eine korrekt in eine Halteeinrichtung eingesetzte oder in einer Halteeinrichtung angeordnete Tageinheit im Überwachungsmodus genutzt wird. Bei Entfernen einer jeweiligen Tageinheit aus ihrer Halteeinrichtung werden die Identifikationsdaten in der Tageinheit gelöscht. Wenn also die räumliche Orientierung der Tageinheit sich um mehr als einen vorbestimmten Toleranzwert ändert, zerstört oder löscht die Tageinheit die Identifikationsdaten. Wird eine Tageinheit also einmal aus einer Halteeinrichtung entfernt, werden die kombinierten Identifikationsdaten gelöscht. Hierdurch ergibt sich der Vorteil, dass man beispielsweise mit einer gestohlenen Tageinheit nicht im Nachhinein das Kraftfahrzeug manipulieren kann. Ein Datenaustausch mit dem Überwachungssystem des Kraftfahrzeugs ist mittels einer solchen Tageinheit nicht mehr möglich.

Eine Ausführungsform sieht vor, dass einer Tageinheit ein Merkmal zugeordnet werden kann. Je nach Position im oder am Fahrzeug kann eine Fahrzeugfunktion angepasst werden. Wird eine Tageinheit beispielsweise das Merkmal "Kindersitz" oder "rückwärts gerichtete Babyschale" zugeordnet, so kann das Fahrzeugsicherungssystem dem Merkmal angepasst werden. Wird die Objektposition einer Tageinheit mit dem Merkmal "rückwärts gerichtete Babyschale" auf dem Beifahrersitz erkannt, wird der Beifahrerairbag deaktiviert. Wird ein Kindersitz vorwärts gerichtet erkannt, können eine Sitzverstellung und/oder eine Anpassung des Airbagsystems am Beifahrersitz erfolgen. Wird die Objektposition einer Tageinheit mit dem Merkmal "Kindersitz" oder "rückwärts gerichtete Babyschale" auf dem Rücksitz erkannt, kann eine Anpassung des Airbagsystems im Fond und/oder eine Sitzverstellung des Rücksitzes erfolgen, auf dem der Kindersitz mit der Tageinheit montiert ist.

Eine Ausführungsform sieht vor, dass einer Tageinheit das Merkmal "externe Box" (Dachbox oder Heckbox) zugeordnet wird. Die Objektposition der Tageinheit an der montierten Box wird ermittelt und im Überwachungsmodus in das Überwachungssystem aufgenommen. Ist die Tageinheit am Boxdeckel angebracht, wird die relative Objektposition zum Fahrzeug der Tageinheit bei einer Bewegung des Boxdeckels, d.h. Öffnung oder Demontage der externen Box, verändert. Bei einer Änderung der relativen Objektposition der Tageinheit zum Fahrzeug kann damit im Überwachungsmodus auf eine unberechtigte Öffnung oder Entfernung der Box vom Fahrzeug geschlossen werden. Vorteilhafterweise ist die Tageinheit an einem im geschlossen Zustand von außen nicht zugänglichen Bereich des Boxdeckels angebracht.
- Eine Ausführungsform sieht vor, dass ein Objekt im Fahrzeug (beispielsweise eine Tasche oder ein sonstiges im Fahrzeug aufbewahrtes Objekt) mit einer Tageinheit versehen werden kann. Die Tageinheit kann zudem ein Merkmal enthalten, dass es sich um ein "Accessoire" oder ein im Fahrzeug aufbewahrtes Objekt handelt. Die Tageinheit kann abhängig von einem Fahrzeugzustand in den Überwachungsmodus genommen werden. Ein möglicher Fahrzeugzustand kann sein: Fahrzeug verschlossen oder unverschlossen,
- Fenster oder Schiebedach geöffnet/verschlossen
- Cabriodach geöffnet/verschlossen

Beispielsweise kann Tageinheit mit dem Merkmal "Tasche" automatisch in den Überwachungsmodus aufgenommen werden, wenn sich die Objektposition der Tageinheit im Fahrzeug befindet, das Fahrzeug verschlossen ist und/oder ein Öffnungselement (Tür Fenster, Schiebedach oder ein Cabriodach) offen ist.

Zu der Erfindung gehört auch das beschriebene Überwachungssystem zum Überwachen eines Kraftfahrzeugs. Das Überwachungssystem weist eine zentrale Steuereinheit und mehrere mobile, portable Tageinheiten auf. Das Überwachungssystem ist dazu eingerichtet, eine Ausführungsform des erfindungsgemäßen Verfahrens durchzuführen. In einem Überwachungsmodus des Überwachungssystems ist jede Tageinheit dazu eingerichtet, mittels einer eigenen Abstandsmesseinrichtung wiederholt einen Abstand zu zumindest einem vorbestimmten Objekt zu erfassen und an die zentrale Steuereinheit per Funk zu signalisieren. Die zentrale Steuereinheit ist dazu eingerichtet, eine jeweilige Objektposition des zumindest einen Objekts auf der Grundlage der jeweiligen Eigenposition zumindest einer oder einiger der Tageinheiten und der jeweils von dieser Tageinheit oder diesen Tageinheiten signalisierten Abstände zu ermitteln und in Abhängigkeit von der jeweils ermittelten Objektposition des zumindest einen Objekts zumindest eine vorbestimmte Sicherungsfunktion in dem Kraftfahrzeug zu steuern. Die jeweilige Tageinheit in dem Kraftfahrzeug wird durch jeweilige Halteeinrichtungen gehalten und jede Halteeinrichtung weist jeweils eine mechanische Codierung auf, durch welche eine räumliche Orientierung der gehaltenen Tageinheit festgelegt wird, wobei die räumliche Orientierung der gehaltenen Tageinheit für die Einbauposition der Halteinrichtung in dem Kraftfahrzeug eindeutig ist. Das funkbasierte Signalisieren kann beispielsweise auf der Grundlage von UWB-Funksignalen erfolgen. Die Kommunikation zwischen Tageinheiten und zentraler Steuereinheit kann beispielsweise auf der Grundlage von WLAN (Wireless Local Area Network) und/oder Bluetooth erfolgen.

Die Tageinheit ist dazu eingerichtet, mittels einer eigenen Lagesensoreinrichtung ihre räumliche Orientierung zu ermitteln und auf der Grundlage der ermittelten räumlichen Orientierung ihre Eigenposition in dem Kraftfahrzeug einer zentralen Steuereinheit zu signalisieren. Die Tageinheit kann beispielsweise die ermittelte Orientierung oder mittels einer Zuordnungsvorschrift die zugehörige Einbauposition in einem Kraftfahrzeug ermitteln. Für die Orientierung kann die Lagesensoreinrichtung zumindest einen Lagesensor und/oder einen elektronischen Kompass umfassen. Die Tageinheit ist des Weiteren dazu eingerichtet, mittels einer eigenen Abstandsmesseinrichtung wiederholt einen Abstand zu zumindest einem vorbestimmten Objekt zu erfassen und der zentralen Steuereinheit zu signalisieren.

Zu der Erfindung gehört auch ein Kraftfahrzeug mit einer Ausführungsform des erfindungsgemäßen Überwachungssystems.

Die Erfindung umfasst auch Kombinationen der beschriebenen Ausführungsformen des Verfahrens und der Tageinheiten.

Im Folgenden ist ein Ausführungsbeispiel der Erfindung beschrieben. Hierzu zeigt:
- Fig. 1: eine schematische Darstellung eines Kraftfahrzeugs mit einer Ausführungsform des erfindungsgemäßen Überwachungssystems;
- Fig. 2: eine schematische Darstellung des Kraftfahrzeugs von Fig. 1, bei welchem das Überwachungssystem in einem Überwachungsmodus betrieben wird;
- Fig. 3: eine schematische Darstellung einer Tageinheit in einer Halteeinrichtung, wie sie durch das Überwachungssystem bereitgestellt sein können;
- Fig. 4: eine schematische Darstellung der Tageinheit im ausgebauten Zustand;
- Fig. 5: eine schematische Darstellung der Tageinheit in unterschiedlichen räumlichen Orientierungen, wie sie durch eine mechanische Codierung von Halteeinheiten des Überwachungssystems erzwungen werden können;
- Fig. 6: eine schematische Darstellung der Tageinheit mit veranschaulichten Erfassungsbereichen einer Abstandsmesseinrichtung der Tageinheit; und
- Fig. 7: ein Flussschaudiagramm eines Verfahrens, das in dem Kraftfahrzeug zum Betreiben des Überwachungssystems durchgeführt werden kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

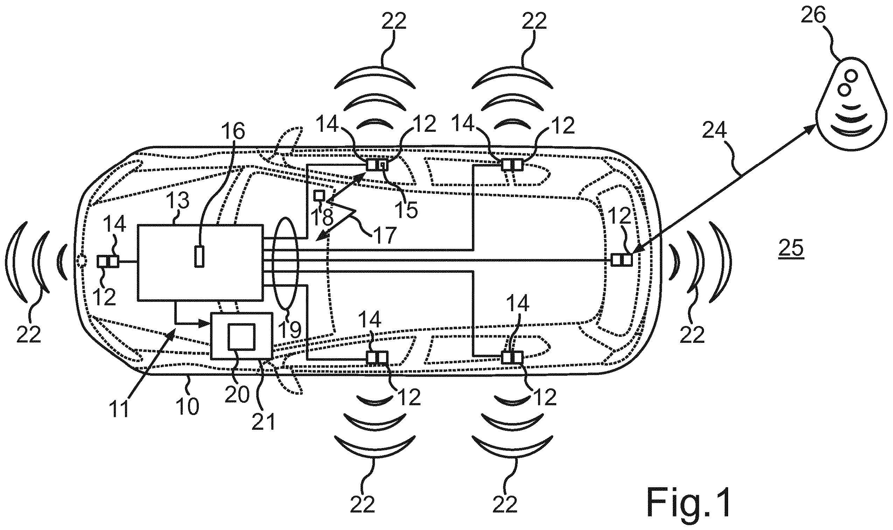

Fig. 1 zeigt ein Kraftfahrzeug 10, bei dem es sich um einen Kraftwagen, insbesondere einen Personenkraftwagen oder Lastkraftwagen, handeln kann. In dem Kraftfahrzeug 10 kann ein Überwachungssystem 11 bereitgestellt sein, welches mehrere Sende- und Empfangseinheiten oder (als Kurzbezeichnung) Tageinheiten 12 und eine zentrale Steuereinheit 13 umfassen kann.

Jede der Tageinheiten 12 kann in dem Kraftfahrzeug 10 jeweils durch eine Halteeinrichtung 14 gehalten sein. Eine Kommunikation zwischen den Tageinheiten 12 und der zentralen Steuereinheit 13 kann funkbasiert erfolgen, beispielsweise auf der Grundlage des WLAN-Standards oder Bluetooth. Die Tageinheiten 12 werden mit der zentralen Steuereinheit 13 verbunden, wenn sie in ihrer jeweiligen Halteeinrichtung 14 eingebracht sind und Identifikationsdaten festgelegt sind, die jeweils aus individuellen, spezifischen Tagidentifikationsdaten 15 und Fahrzeugidentifikationsdaten 16 gebildet sind. Die Tagidentifikationsdaten 15 sind der Übersichtlichkeit halber nur für eine Tageinheit 12 illustriert. Eine Energieversorgung der Tageinheiten 12 in den Halteeinrichtungen 14 kann über elektrische Leitungen 19 erfolgen. Aus den jeweiligen Tagidentifikationsdaten 15 und den Fahrzeugidentifikationsdaten 16 werden dann für einen Datenaustausch 17 Identifikationsdaten 18 gebildet. Jede Tageinheit 12 hat individuelle, unverwechselbare, eindeutige Tagidentifikationsdaten 15. Die Datenverbindung aller Tageinheiten 12 mit der Steuereinheit 11 wird erst aktiv, wenn das Kraftfahrzeug beispielsweise mittels einer Zentralverrieglungsanlage 20 verschlossen wird. Wenn das Kraftfahrzeug 10 verriegelt wird, ist hierbei durch die Halteeinrichtungen 14 sichergestellt, dass die Tageinheiten 12 in einem vorbestimmten Abstand zueinander und mit einer jeweiligen individuellen räumlichen Orientierung gehalten sind.

Durch die Steuereinheit 11 kann dann eine Sicherungsfunktion 21 auf Grundlage der Tageinheiten 12 gesteuert werden. Die Sicherungsfunktion 21 kann beispielsweise das Steuern der Zentralverriegelungsanlage 20 umfassen. Die Tageinheiten 12 können beispielsweise auf Grundlage eines jeweiligen Funksignals 22 einen jeweiligen Abstand 24 zumindest eines Objekts 26 in einer Umgebung 25 des Kraftfahrzeugs 10 erfassen. Beispielsweise kann als ein Objekt ein Zugangsberechtigungstransponder 26 erfasst werden, der ebenfalls auf der Grundlage einer Tageinheit 12 gebildet sein kann. Alternativ dazu kann der Zugangsberechtigungstransponder 26 beispielsweise auf der Grundlage eines Funkschlüssels oder eines mobilen Endgeräts, wie beispielsweise eines Smartphones, gebildet sein. Das Ermitteln des Abstands 24 durch eine jeweilige Tageinheit 12 kann in an sich aus dem Stand der Technik bekannter Weise durchgeführt werden, beispielsweise auf der Grundlage der eingangs beschriebenen UWB-Funksignale. Jede Tageinheit 12 kann dann unter Verwendung der Identifikationsdaten 18 den jeweils ermittelten Abstand 24 an die Steuereinheit 11 signalisieren. Die Steuereinheit 11 kann dann in Abhängigkeit von dem Abstand des Objekts 26 die Sicherungsfunktion 21 steuern. Beispielsweise kann eine Entriegelung einer Fahrzeugtür des Kraftfahrzeugs 10 durch die Zentralverriegelungsanlage 20 nur dann zugelassen oder aktiviert oder freigegeben werden, wenn sich das Objekt 26 in Form des Zugangsberechtigungstransponders 26 in einem vorbestimmten Bereich in der Umgebung 25 um das Kraftfahrzeug 10 herum befindet, sich also beispielsweise näher als zehn Meter oder näher als drei Meter Abstand zum Kraftfahrzeug 10 angeordnet ist.

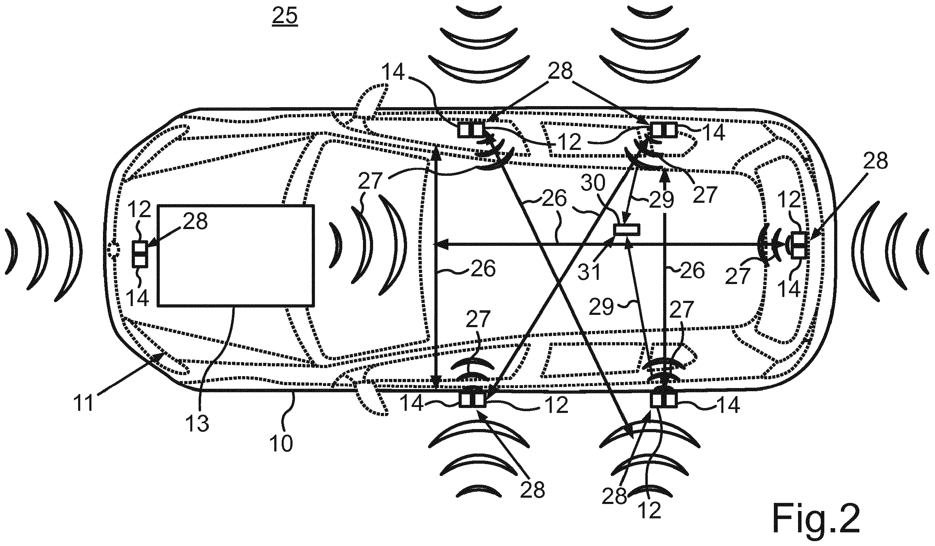

Fig. 2 veranschaulicht, wie jede Tageinheit 12 bidirektional nicht nur von außerhalb des Kraftfahrzeugs 10 auf dessen Umgebung 25, sondern auch innerhalb des Kraftfahrzeugs 10 einen jeweiligen Abstand 24 voneinander ebenfalls beispielsweise auf der Grundlage von UWB-Funksignalen 27 erfolgen. Die Tageinheiten 12 können auch diese Abstände 26 an die Steuereinheit 13 melden. Die Steuereinheiten 13 kann die jeweilige Eigenposition 28 jeder Tageinheit 12 ebenfalls von der jeweiligen Tageinheit 12 mitgeteilt bekommen. Jede Tageinheit 12 kann die in der noch zu beschreibenden Weise auf Grundlage ihrer räumlichen Orientierung im Kraftfahrzeug 10 erkennen. Die Steuereinheit 13 kann somit auf der Grundlage der Eigenpositionen 28 der Tageinheiten 12 und der von den Tageinheiten 12 signalisierten Abstände 24 und/oder 26 beispielsweise durch Triangulation und durch Kenntnis der Anbringung der Tageinheiten 12 in den Halteeinrichtungen 14 die Außenerkennung und/oder Innenerkennung eines oder mehrerer Objekte mittels UWB-Funksignalen 22, 27 durchführen. Beispielsweise können die Tageinheiten 12 die Abstände 26 untereinander überwachen und hierdurch durch die Steuereinheit 13 erkannt werden, falls eine Tageinheit 12 aus ihrer Halteeinrichtung 14 bewegt oder entfernt wird. Zudem können auch jeweilige Abstände 29 zu einem oder mehreren mobilen Endgeräten 30 oder einer Funkfernbedienung oder allgemein eines Zugangsberechtigungstransponders (Objekt 26) ermittelt werden. Auch dies kann mittels der UWB-Funksignale 27 erfolgen. In Fig. 2 ist hierbei die Innenerkennung im Kraftfahrzeug 10 dargestellt. Fig. 1 zeigt die entsprechende Außenerkennung. Je mehr Tageinheiten 12 im Kraftfahrzeug 10 verbaut sind, umso zuverlässiger wird die Erkennung einer jeweiligen Objektposition 31 durch die Steuereinheit 13.

Aber auch Personen, die sich im Kraftfahrzeug 10 aufhalten können, können zusätzlich durch ihre Abschirmung der UWB-Funksignale 27 erkannt werden und somit auch eine Personenerkennung im Innenraum durchgeführt werden. Beispielsweise äußerst sich dies durch eine Dämpfung der UWB-Funksignale 27, sodass ein auf Basis der Signalintensität ermittelter Abstand 26 bei einer Unterbrechung der Sichtlinie zwischen zwei Tageinheiten 12 eine scheinbare Veränderung des Abstands 26 bei der Messung bewirkt.

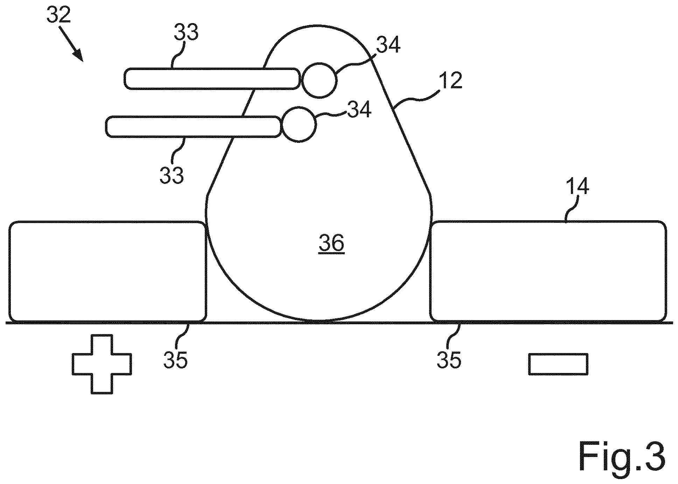

Fig. 3 veranschaulicht eine Tageinheit 12 in ihrer Halteeinrichtung 14. Die Halteeinrichtung 14, wie sie in Fig. 3 dargestellt ist, repräsentiert beispielhaft die in Fig. 1 und Fig. 2 dargestellten Halteeinrichtungen. Jede Halteeinrichtung 14 kann eine mechanische Codierung 32 aufweisen, durch welche eine räumliche Lage der durch die Halteeinrichtung 14 jeweils gehaltenen Tageinheit 12 festgelegt wird. Die mechanische Codierung 32 kann beispielsweise auf der Grundlage von Stutzen oder Splinten 33 realisiert sein, zu welchen jede Tageinheit 12 korrespondierende Öffnungen oder Aussparungen 34 aufweist, in welche die Splinte 33 gesteckt werden, wenn die Tageinheit 12 in der Halteeinrichtung 14 befestigt wird. Jede Halteeinrichtung 14 kann optional eine elektrische Verbindung der Tageinheit 12 ermöglichen. Hierzu können elektrische Kontakte 35 in der Halteeinrichtung 14 vorgesehen sein, die beispielsweise einen metallisch ausgelegten Deckel 36 der Tageinheit 12 berühren können, wenn die Tageinheit 12 in der Halteeinrichtung 14 gehalten ist. Jedoch kann eine Tageinheit 12 auch mit einer Batterie bestückt sein.

Die Halteeinrichtungen 14 sind bevorzugt im Innenraum des Kraftfahrzeugs 10 vorgesehen. Das Herausnehmen einer Tageinheit 12 ist somit nur bei geöffnetem Kraftfahrzeug 10 möglich. Bevorzugt ist jede Halteeinrichtung 14 von außen nicht sichtbar in dem Kraftfahrzeug 10 angeordnet. Die mechanische Codierung 32 bewirkt bevorzugt einen Formschluss mit der Tageinheit 12, um hierdurch eine feste Ortsrichtung oder räumliche Orientierung beim Einbau zu erzwingen.

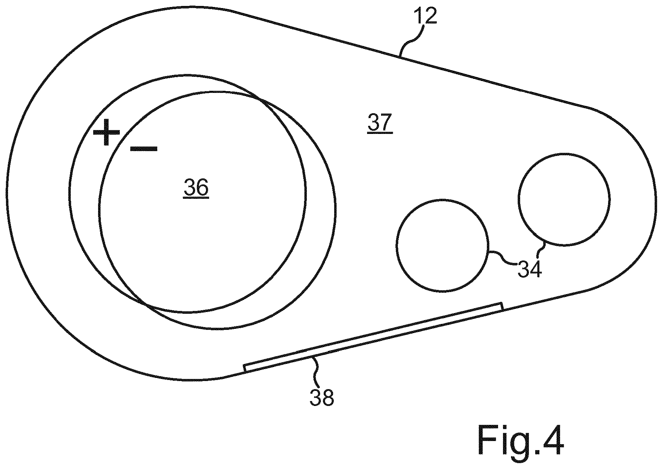

Fig. 4 veranschaulicht nochmal eine einzelne Tageinheit 12, deren Gehäuse 37 den metallisch ausgelegten Deckel 36 mit den zwei Polaritäten Plus und Minus für den Empfang der elektrischen Spannung von den Kontakten 35 der Halteeinrichtung 14 aufweist. Des Weiteren sind die Aussparungen 34 für den Formschluss mit der mechanischen Codierung 33 einer Halteeinrichtung 14 dargestellt. Schließlich ist veranschaulicht, dass beispielsweise an einer Innenwandung des Gehäuses 14 eine Antenne 38 zum Erzeugen der UWB-Funksignale angeordnet sein kann. Eine größte Abmessung der Tageinheit 12 kann in einem Bereich von vier Zentimetern bis 15 Zentimetern liegen.

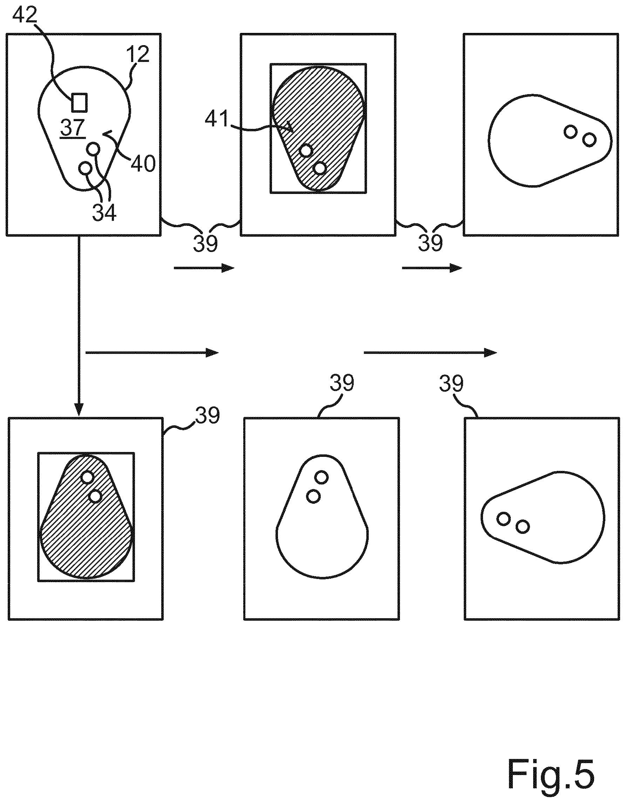

Fig. 5 veranschaulicht, wie unterschiedliche räumliche Orientierungen 39 einer Tageinheit 12 durch unterschiedliche mechanische Codierungen erzwungen werden können. Hierbei ist eine Vorderseite 40 und eine Rückseite 41 der Tageinheit 12 durch eine Schraffierung der Rückseite 41 kenntlich gemacht oder unterschieden. Die unterschiedlichen räumlichen Orientierungen 39 ergeben sich durch die entsprechende unterschiedliche Anordnung der mechanischen Codierung 32 der Halteeinrichtungen 14. Jede Tageinheit 12 kann eine eigene Lagesensoreinrichtung 42 aufweisen, mittels welcher die aktuelle räumliche Orientierung 39 der Tageinheit 12 erkannt werden kann. Diese Lagesensoreinrichtung 42 kann beispielsweise neben zumindest einem Lagesensor für eine jeweilige räumliche Achse auch einen elektronischen Kompass zum Ermitteln einer absoluten Ausrichtung im Erdmagnetfeld umfassen. Die Positionen der Tageinheiten 12 werden somit durch den Einbauort im Kraftfahrzeug 10 festgelegt, nämlich den jeweiligen Einbauort 28 der Halteeinrichtungen 14. Die Lagesensoreinrichtung 42 jeder Tageinheit 12 erkennt die Eigenposition 28 der Tageinheit 12 anhand der räumlichen Orientierung 39. Ein Wechsel einer Tageinheit 12 oder eine Teilbestückung mit nur einer Tageinheit ist somit auch möglich, da die Zentraleinheit 13 die Eigenposition 28 jeder verbauten Tageinheit 12 mitgeteilt bekommt. Jede Tageinheit 12 hat durch eine eingebrachte Öse oder Aussparung 34 eine formschlüssige Halterung immer in einer anderen räumlichen Orientierung 39 bezüglich des Kraftfahrzeugs 10, je nachdem, in welcher Halteeinrichtung 14 die Tageinheit 12 aktuelle angeordnet ist.

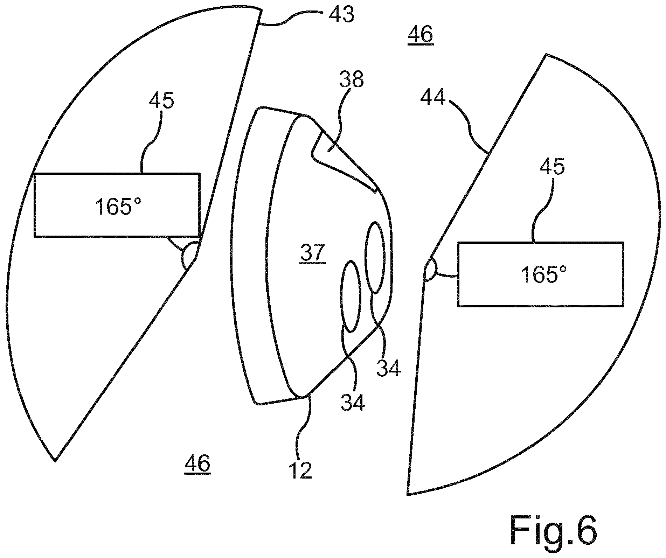

Fig. 6 veranschaulicht, wie durch die Antennenstrukturen 38 zwar eine Abstrahlcharakteristik 43 zum Aussenden der UWB-Funksignale 22 in die Umgebung 25 und eine Abstrahlcharakteristik 44 zum Abstrahlen der UWB-Funksignale 27 in den Innenraum des Kraftfahrzeugs 10 realisiert werden können. Ein beispielhafter Öffnungswinkel 45 der Abstrahlcharakteristiken 43, 44 kann beispielsweise 165 Grad betragen, wobei dies nur ein beispielhafter Wert ist. Bevorzugt ist bei dem Kraftfahrzeug 10 vorgesehen, dass die Halteeinrichtungen 14 eine Einbauposition im Kraftfahrzeug 10 aufweisen, durch die sich bei jeweils in der Halteeinrichtung 14 angeordneter Tageinheit 12 ein Zwischenbereich 46 zwischen den Abstrahlcharakteristiken 43, 44 parallel zu der nächstliegenden Fensterscheibe des Kraftfahrzeugs 10 ausgerichtet ist. Die Ebene dieser Fensterscheibe muss nicht mit einem Funksignal versorgt werden.

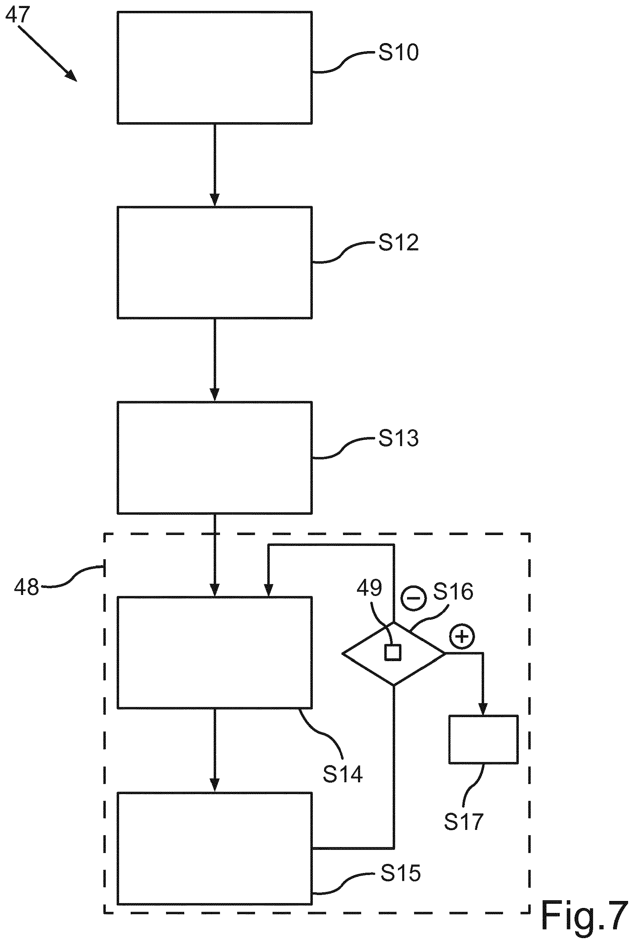

Fig. 7 veranschaulicht ein Verfahren 47, das in dem Kraftfahrzeug 10 zum Betreiben des Überwachungssystems 11 durchgeführt werden kann. In einem Schritt S10 werden zunächst durch das Überwachungssystem 11 die zentrale Steuereinheit 13 und die Tageinheiten 12 bereitgestellt. Die Steuereinheit 13 kann beispielsweise durch ein Infotainmentsystem oder ein Steuergerät des Kraftfahrzeugs 10 realisiert sein.

In einem Schritt S12 werden die Tageinheiten in dem Kraftfahrzeug 10 durch jeweils eine Halteeinrichtung 14 gehalten und mittels der mechanischen Codierung 32 der Halteeinheiten 14 ihre räumliche Orientierung 39 festgelegt. Jede Tageinheit kann in einem Schritt S13 mittels ihrer Lagesensoreinrichtung 42 ihre räumliche Orientierung 39 ermitteln und der Steuereinheit 13 per Funk übermitteln, beispielsweise auf der Grundlage von WLAN oder Bluetooth oder einem UWB-Funksignal.

Sodann kann beispielsweise bei Verriegeln des Kraftfahrzeugs 10 mittels der Zentralverriegelung 20 ein Überwachungsmodus 48 gestartet werden. Im

Überwachungsmodus 48 kann in einem Schritt S14 jede Tageinheit mittels der Abstandsmesseinrichtung 38 wiederholt den jeweiligen Abstand 24, 26, 29 zu zumindest einem Objekt (zum Beispiel Zugangsberechtigungstransponder 26, andere Tageinheit 12 und/oder mobiles Endgerät 31) erfasst und an die zentrale Steuereinheit 13 per Funk signalisiert.

In einem Schritt S15 kann durch die zentrale Steuereinheit 13 eine jeweilige Objektposition des zumindest einen Objekts (zum Beispiel Koordinaten oder ein Abstand zu jeweils einer Eigenposition 28) auf der Grundlage der jeweiligen Eigenposition 28 zumindest einer oder einiger der Tageinheiten 12 und der jeweils von dieser Tageinheit 12 oder diesen Tageinheiten 12 signalisierten Abstände 24, 26, 29 ermittelt werden. In einem Schritt S16 kann durch die Steuereinheit 13 überprüft werden, ob eine sich während des Überwachungsmodus 48 ergebende Positionsänderung oder Veränderung der jeweiligen Objektposition des zumindest einen Objekts größer als ein vorbestimmter Toleranzwert 49 ist. Ist dies nicht der Fall (in Fig. 7 durch ein "-"-Zeichen symbolisiert), so kann weiter mit der Abstandsüberwachung im Schritt S14 fortgefahren werden. Ist dagegen die Veränderung der Objektposition größer als der Toleranzwert 49 (in Fig. 7 durch ein "+"-Zeichen symbolisiert) die Sicherungsfunktion 21 angesteuert werden, also beispielsweise die Zentralverriegelung 20 entriegelt werden, falls sich ein Zugangsberechtigungstransponder 26 innerhalb eines vorbestimmten Bereichs um das Kraftfahrzeug 10 befindet oder eine Tageinheit 12 bewegt wird oder das mobile Endgerät 31 aus dem Kraftfahrzeug 10 entfernt wird.

Es kann auch vorgesehen sein, eine der Tageinheiten 12 an einen zu sichernden Gegenstand, zum Beispiel ein an dem Kraftfahrzeug 10 gehaltenes Fahrrad, mit seiner Position außerhalb des Kraftfahrzeugs 10 zu sichern oder zu überwachen. Hierzu kann im Kraftfahrzeug 10 bei dessen Stillstand die Verbindung zu dieser Tageinheit 12 durch eine Funkverbindung hergestellt werden und die Eigenposition der Tageinheit 12 erfasst werden. Durch Orten der Tageinheit 12 an dem Gegenstand durch die übrigen Tageinheiten 12 kann nun der Abstand der Tageinheit 12 am Gegenstand und damit die Objektposition dieses Gegenstands gemessen werden. Nachdem die Alarmanlage des Kraftfahrzeugs 10 scharf geschaltet ist, ist somit auch dieser Gegenstand, also beispielsweise das Fahrrad, mit der dort angebrachten Tageinheit in Bezug auf seine Objektposition bezüglich des Kraftfahrzeugs 10 gesichert. Wird das Kraftfahrzeug 10 entriegelt und damit die Alarmanlage oder Diebstahlwarnanlage entschärft, so wird auch die Tageinheit 12 an diesem Gegenstand deaktiviert. Die Tageinheit 12 kann weiterhin an dem Gegenstand, also beispielsweise dem Fahrrad, verbleiben und per Funk wieder aktiviert werden. Eine Tageinheit 12 kann batteriebetrieben sein und hierbei einen Bewegungssensor aufweisen, welcher die Batterielebensdauer der Batterie der Tageinheit 12 besser ausnutzt, indem die Tageinheit 12 beispielsweise nach einer vorbestimmten Zeit ab Beginn einer Bewegung des Tags, wie sie sich beispielsweise während einer Fahrt des Kraftfahrzeugs 10 ergibt, ausgeschaltet wird und im Stillstand wieder aktiviert wird.

Die an dem Gegenstand befestigte Tageinheit 12 kann auch zum funkbasierten Wiederfinden des Gegenstands genutzt werden, falls der Gegenstand von dem Kraftfahrzeug 10 entfernt wird.

Das Kraftfahrzeug 10 ermöglicht somit insgesamt eine Auslegung bzw. Verortung der UWB-Sender/Empfänger (Tageinheiten 12) in einem sichtbaren Bereich des Kraftfahrzeugs 10. Hierbei werden diese Tageinheiten 12 bevorzugt so positioniert, dass eine Tageinheit 12 den Innen- und Außenbereich eines Kraftfahrzeugs gleichzeitig ausleuchtet (siehe Fig. 6). Vorzugsweise wird jede Tageinheit 12 in der Fensterumrahmung so positioniert, dass die Ausstrahlcharakteristik in einem Bereich von mindesten 2 * 165 ° erfolgt. Die Ausrichtung der Tageinheiten 12 wird mit einer mechanischen Codierung 32 so versehen, dass unterschiedliche Ausrichtungen die Position im Kraftfahrzeug 10 repräsentieren. Eine Lagesensoreinrichtung 42 in der Tageinheit 12 meldet dann dem Kraftfahrzeug seine Position im Kraftfahrzeug 10 und eigene Tagidentifikationsdaten 15. Diese Tagidentifikationsdaten 15 (TAG_ID) werden mit den Fahrzeugidentifikationsdaten 16 (Fzg_ID) des Kraftfahrzeugs 10 zu unverwechselbaren Identifikationsdaten 18 (ID) verknüpft. Die Identifikationsdaten 18 können auch von der erkannten Eigenposition 28 abhängen (ID_Eigenpos). Wenn eine Tageinheit 12 in einer Halteeinrichtung 14 erkannt wird, kann diese Tageinheit 12 nur mit diesem Kraftfahrzeug 10 verknüpft werden. Der Ausbau einer Tageinheit 12 ist nur bei geöffneten Kraftfahrzeug 10 möglich.

Wenn das Kraftfahrzeug 10 einmal verriegelt war, wird die Bewegung des Kraftfahrzeugs 10 und der Tageinheiten 12 synchronisiert (mittels entsprechender Sensoren der Tageinheiten 12 und des Kraftfahrzeugs 10), so dass keine Fremdbenutzung möglich ist. Wird der TAG einmal vom Kraftfahrzeug 10 entfernt, so ist die eindeutige ID_Eigenpos = TAG_ID + Fzg_ID gelöscht. Ein erneutes Anlernen ist erforderlich.

Die Synchronisierung der Tageinheiten 12 wird während der Fahrt durchgeführt, so dass alle Tageinheiten 12 zwar eine unterschiedliche räumliche Ausrichtung oder Orientierung haben, aber das gleiche Bewegungsprofil besitzen. Diese Bewegungsprofile können abgeglichen werden, um nur solchen Tageinheiten 12 gültige Identifikationsdaten 18 zuzuordnen, die ein mit dem Bewegungsprofil des Kraftfahrzeugs 10 übereinstimmendes Bewegungsprofil aufweisen. Zusätzlich kann der Abstand 26 der Tageinheiten 12 untereinander ermittelt werden. Somit kann sichergestellt werden, dass die Tageinheiten 12 sich an den festen Eigenpositionen 28 im Kraftfahrzeug 10 befinden und auch nicht ausgetauscht werden.

Die Tageinheiten 12 können den Abstand 29 zu einem mobilen Endgerät 31 messen und können auch über eine bidirektionale Schnittstelle kommunizieren.

Insgesamt zeigt das Beispiel, wie durch die Erfindung eine Türentriegelungssteuerung auf Grundlage einer UWB-Sensorik im Kraftfahrzeug bereitgestellt werden kann.

### Bezugszeichenliste

- 10: Kraftfahrzeug
- 11: Überwachungssystem
- 12: Tageinheit
- 13: Zentrale Steuereinheit
- 14: Halteeinrichtung
- 15: Tagidentifikationsdaten
- 16: Fahrzeugidentifikationsdaten
- 17: Funkverbindung
- 18: Identifikationsdaten
- 19: Elektrische Leitungen
- 20: Zentralverriegelungsanlage
- 21: Sicherungsfunktion
- 22: UWB-Funksignal
- 24: Abstand
- 25: Umgebung
- 26: Zugangsberechtigungstransponder
- 27: UWB-Funksignal
- 28: Eigenposition
- 29: Abstand
- 30: Mobiles Endgerät
- 31: Objektposition
- 32: Mechanische Codierung
- 33: Splint
- 34: Aussparung
- 35: Elektrischer Kontakt
- 36: Deckel
- 37: Gehäuse
- 38: Abstandsmesseinrichtung
- 39: Räumliche Orientierung
- 40: Vorderseite
- 41: Rückseite
- 42: Lagemesseinrichtung
- 43: Richtcharakteristik
- 44: Richtcharakteristik
- 45: Öffnungswinkel
- 46: Bereich
- 47: Verfahren
- 48: Überwachungsmodus
- 49: Toleranzwert
- S10-S17: Verfahrensschritt

## Patentansprüche

1. Verfahren (47) zum Betreiben eines funkbasierten Überwachungssystems (11) eines Kraftfahrzeugs (10), wobei
- durch das Überwachungssystem (11) eine zentrale Steuereinheit (13) und mehrere mobile, portable Tageinheiten (12) bereitgestellt werden,
- die Tageinheiten (12) in dem Kraftfahrzeug (10) durch eine jeweilige Halteeinrichtung (14) gehalten werden und jede Halteeinrichtung (14) jeweils eine mechanische Codierung (32) aufweist, durch welche eine räumliche Orientierung (39) der gehaltenen Tageinheit (12) festgelegt wird, wobei die räumliche Orientierung (39) der gehaltenen Tageinheit (12) für die Einbauposition der Halteinrichtung (14) in dem Kraftfahrzeug (10) charakteristisch ist, und
- jede Tageinheit (12) mittels einer eigenen Lagesensoreinrichtung (42) ihre räumliche Orientierung (39) und damit ihre Eigenposition (28) in dem Kraftfahrzeug (10) ermittelt und an die zentrale Steuereinheit (13) per Funk (17) signalisiert und
- in einem Überwachungsmodus (47) des Überwachungssystems (11) jede Tageinheit (12) mittels einer eigenen Abstandsmesseinrichtung (38) wiederholt einen Abstand (24, 26, 29) zu zumindest einem vorbestimmten Objekt (12, 26, 30) erfasst und an die zentrale Steuereinheit (13) per Funk (17) signalisiert und
- die zentrale Steuereinheit (13) eine jeweilige Objektposition (31) des zumindest einen Objekts (12, 26, 30) auf der Grundlage der jeweiligen Eigenposition (28) zumindest einer oder einiger der Tageinheiten (12) und der jeweils von dieser Tageinheit (12) oder diesen Tageinheiten (12) signalisierten Abstände (24, 26, 29) ermittelt und in Abhängigkeit von der jeweils ermittelten Objektposition (31) des zumindest einen Objekts (12, 26, 30) zumindest eine vorbestimmte Sicherungsfunktion (21) in dem Kraftfahrzeug (10) steuert.

2. Verfahren (47) nach Anspruch 1, wobei die Objektposition (31) eines portablen Zugangsberechtigungstransponders des Kraftfahrzeugs (10) ermittelt wird und als eine Sicherungsfunktion (21) eine Zentralverriegelungsanlage (20) und/oder eine Wegfahrsperre gesteuert wird.

3. Verfahren (47) nach Anspruch 2, wobei die Steuerung der Sicherungsfunktion (21) vorsieht, dass sich der Zugangsberechtigungstransponder bei einem Startversuch zum Starten des Kraftfahrzeugs (10) innerhalb des Kraftfahrzeugs (10) und/oder bei einem Öffnungsversuch zum Öffnen des Kraftfahrzeugs (10) in einem vorbestimmten Umgebungsbereich um das Kraftfahrzeug (10) befinden muss.

4. Verfahren (47) nach einem der vorhergehenden Ansprüche, wobei die Objektposition (31) eines gegen Diebstahl aus dem Kraftfahrzeug (10) zu schützenden Gegenstands, der eine Transpondereinheit für eine Abstandsmessung aufweist, ermittelt wird und als eine Sicherungsfunktion (21) eine Alarmanlage gesteuert wird.

5. Verfahren (47) nach einem der vorhergehenden Ansprüche, wobei die jeweilige Objektposition (31) zumindest einer der Tageinheiten (12) ermittelt wird und als eine Sicherungsfunktion (21) eine Funktionsblockade zumindest einer vorbestimmten Funktion gesteuert wird.

6. Verfahren (47) nach Anspruch 5, wobei bei einer Änderung der Objektposition (31) um einen Betrag größer als ein vorbestimmter Toleranzwert (49) eine schlüssellose, funkbasierte Entriegelungsfunktion des Kraftfahrzeugs (10) durch die Funktionsblockade deaktiviert wird.

7. Verfahren (47) nach einem der vorhergehenden Ansprüche, wobei jede der Tageinheiten (12) durch ihre jeweilige Halteeinrichtung (14) reversibel und zerstörungsfrei lösbar gehalten wird.

8. Verfahren (47) nach einem der vorhergehenden Ansprüche, wobei in jeder der Tageinheiten (12) mittels eines eigenen Bewegungssensors ein Aktivitätszustand der jeweiligen Tageinheit (12) geschaltet wird.

9. Verfahren (47) nach einem der vorhergehenden Ansprüche, wobei in den Halteeinrichtungen (14) die dort jeweils gehaltene Tageinheit (12) über elektrische Kontakte (35) der Halteeinrichtung (14) mit elektrischer Energie versorgt wird.

10. Verfahren (47) nach einem der vorhergehenden Ansprüche, wobei zu Beginn einer Parkphase in Abhängigkeit von einem Verriegelungssignal, welches einen Verriegelungsvorgang des Kraftfahrzeugs (10) signalisiert, die jeweilige Eigenposition der Tageinheiten (12) ermittelt und der Überwachungsmodus (47) gestartet wird.

11. Verfahren nach einem der vorhergehenden Ansprüche, wobei bei einem Datenaustausch zwischen den Tageinheiten (12) einerseits und der Steuereinheit (13) andererseits jeweils eindeutige, für die jeweilige Tageinheit (12) spezifische Identifikationsdaten (18) als Senderkennung verwendet werden, wobei die jeweiligen Identifikationsdaten (18) aus eindeutigen Tagidentifikationsdaten (15) der jeweiligen Tageinheit (12) und eindeutigen, für das Kraftfahrzeug (10) spezifischen Fahrzeugidentifikationsdaten (16) gebildet werden.

12. Verfahren nach Anspruch 11, wobei die Identifikationsdaten durch die zentrale Steuereinheit (13) für eine jeweilige Tageinheit (12) nur vergeben werden, falls die Tageinheit (12) eine räumliche Orientierung (39) erfasst hat, welche mit der mechanischen Codierung (32) einer der Halteeinrichtungen (14) korrespondiert, und bei Entfernen einer jeweiligen Tageinheit (12) aus ihrer Halteeinrichtung (12) die Identifikationsdaten (18) in der Tageinheit (12) gelöscht werden.

13. Überwachungssystem (11) zum Überwachen eines Kraftfahrzeugs (10), wobei das Überwachungssystem (11) eine zentrale Steuereinheit (13) und mehrere mobile, portable Tageinheiten (12) aufweist, wobei
- jede Tageinheit (12) dazu eingerichtet ist, in einem Überwachungsmodus (47) des Überwachungssystems (11) mittels einer eigenen Abstandsmesseinrichtung (38) wiederholt einen Abstand (24, 26, 29) zu zumindest einem vorbestimmten Objekt (12, 26, 30) zu erfassen und an die zentrale Steuereinheit (13) per Funk (17) zu signalisieren,
- die zentrale Steuereinheit (13) dazu eingerichtet ist, eine jeweilige Objektposition (31) des zumindest einen Objekts (12, 26, 30) auf der Grundlage der jeweiligen Eigenposition (28) zumindest einer oder einiger der Tageinheiten (12) und der jeweils von dieser Tageinheit (12) oder diesen Tageinheiten (12) signalisierten Abstände (24, 26, 29) zu ermitteln und in Abhängigkeit von der jeweils ermittelten Objektposition (31) des zumindest einen Objekts (12, 26, 30) zumindest eine vorbestimmte Sicherungsfunktion (21) in dem Kraftfahrzeug (10) zu steuern,
- die jeweilige Tageinheit (12) dazu eingerichtet ist, mittels einer eigenen Lagesensoreinrichtung (42) ihre räumliche Orientierung (39) zu ermitteln und auf der Grundlage der ermittelten räumlichen Orientierung (39) ihre Eigenposition (28) in dem Kraftfahrzeug (10) einer zentralen Steuereinheit (13) zu signalisieren und mittels einer eigenen Abstandsmesseinrichtung (38) wiederholt einen Abstand (24, 26, 29) zu zumindest einem vorbestimmten Objekt (12, 26, 30) zu erfassen und der zentralen Steuereinheit (13) zu signalisieren, und
- die jeweilige Tageinheit (12) in dem Kraftfahrzeug (10) durch jeweilige Halteeinrichtungen (14) gehalten sind und jede Halteeinrichtung (14) jeweils eine mechanische Codierung (32) aufweist, durch welche eine räumliche Orientierung (39) der gehaltenen Tageinheit (12) festgelegt wird, wobei die räumliche Orientierung (39) der gehaltenen Tageinheit (12) für die Einbauposition der Halteinrichtung (14) in dem Kraftfahrzeug (10) eindeutig ist.

14. Kraftfahrzeug (10) mit einem Überwachungssystem (11) nach Anspruch 13.

## Claims

1. Method (47) for operating a wireless-based monitoring system (11) of a motor vehicle (10), wherein
- a central control unit (13) and a plurality of mobile, portable tag units (12) are made available by the monitoring system (11),
- the tag units (12) are held in the motor vehicle (10) by a respective retention device (14) and each retention device (14) respectively has a mechanical encoding (32) through which a spatial orientation (39) of the held tag unit (12) is specified, wherein the spatial orientation (39) of the held tag unit (12) is characteristic of the installation position of the retention device (14) in the motor vehicle (10), and
- each tag unit (12) determines its spatial orientation (39) and thereby its characteristic position (28) in the motor vehicle (10) by means of its own position sensor device (42), and signals said characteristic position by a wireless connection (17) to the central control unit (13), and
- in a monitoring mode (47) of the monitoring system (11), each tag unit (12), by means of its own distance measuring device (38), repeatedly captures a distance (24, 26, 29) from at least one predetermined object (12, 26, 30) and signals this by a wireless connection (17) to the central control unit (13), and
- the central control unit (13) determines a respective object position (31) of the at least one object (12, 26, 30) on the basis of the respective characteristic position (28) of at least one or a few of the tag units (12) and of the distances (24, 26, 29) signalled respectively by this tag unit (12) or these tag units (12), and controls at least one predetermined security function (21) in the motor vehicle (10) depending on the respective determined object position (31) of the at least one object (12, 26, 30) .

2. Method (47) according to Claim 1, wherein the object position (31) of a portable access authorization transponder of the motor vehicle (10) is determined, and a central locking system (20) and/or an immobilizer is/are controlled as a security function (21).

3. Method (47) according to Claim 2, wherein the control of the security function (21) provides that the access authorization transponder must be present in the motor vehicle (10) during a starting attempt to start the motor vehicle (10) and/or in a predetermined region surrounding the motor vehicle (10) during an opening attempt to open the motor vehicle (10).

4. Method (47) according to one of the preceding claims, wherein the object position (31) of an object to be protected against theft from the motor vehicle (10), which comprises a transponder unit for a distance measurement, is determined, and an alarm system is controlled as a security function (21).

5. Method (47) according to one of the preceding claims, wherein the respective object position (31) of at least one of the tag units (12) is determined, and a function blockage of at least one predetermined function is controlled as a security function (21).

6. Method (47) according to Claim 5, wherein, in the event of a change in the object position (31) by an amount greater than a predetermined tolerance value (49), a keyless, wireless-based unlocking function of the motor vehicle (10) is deactivated by the function blockage.

7. Method (47) according to one of the preceding claims, wherein each of the tag units (12) is held reversibly and in a manner that can be released without damage by its respective retention device (14).

8. Method (47) according to one of the preceding claims, wherein an activity state of the respective tag unit (12) is switched in each of the tag units (12) by means of an individual movement sensor.

9. Method (47) according to one of the preceding claims, wherein the tag unit (12) respectively held in the retention devices (14) is supplied with electrical energy via electrical contacts (35) in the retention device (14).

10. Method (47) according to one of the preceding claims, wherein, depending on a locking signal that signals a locking process of the motor vehicle (10), the respective characteristic position of the tag units (12) is determined at the beginning of a parking phase and the monitoring mode (47) is started.

11. Method according to one of the preceding claims, wherein, during a data exchange between the tag units (12) on the one hand and the control unit (13) on the other hand, respective, unique identification data (18) specific to the respective tag unit (12) are used as transmitter identification, wherein the respective identification data (18) are formed from unique tag identification data (15) of the respective tag unit (12) and unique vehicle identification data (16) specific to the motor vehicle (10).

12. Method according to Claim 11, wherein the identification data are only assigned by the central control unit (13) for a respective tag unit (12) if the tag unit (12) has captured a spatial orientation (39) that corresponds to the mechanical encoding (32) of one of the retention devices (14), and, when a respective tag unit (12) is removed from its retention device (12), the identification data (18) in the tag unit (12) are deleted.

13. Monitoring system (11) for monitoring a motor vehicle (10), wherein the monitoring system (11) comprises a central control unit (13) and a plurality of mobile, portable tag units (12), wherein
- in a monitoring mode (47) of the monitoring system (11), each tag unit (12), by means of its own distance measuring device (38), is designed to repeatedly capture a distance (24, 26, 29) from at least one predetermined object (12, 26, 30) and to signal this by a wireless connection (17) to the central control unit (13),
- the central control unit (13) is designed to determine a respective object position (31) of the at least one object (12, 26, 30) on the basis of the respective characteristic position (28) of at least one or a few of the tag units (12) and of the distances (24, 26, 29) signalled respectively by this tag unit (12) or these tag units (12), and to control at least one predetermined security function (21) in the motor vehicle (10) depending on the respective determined object position (31) of the at least one object (12, 26, 30),
- the respective tag unit (12) is designed to determine its spatial orientation (39) by means of its own position sensor device (42) and, on the basis of the determined spatial orientation (39), to signal its characteristic position (28) in the motor vehicle (10) to a central control unit (13) and, by means of its own distance measuring device (38), to repeatedly capture a distance (24, 26, 29) from at least one predetermined object (12, 26, 30) and to signal this to the central control unit (13), and
- the respective tag unit (12) is held in the motor vehicle (10) by respective retention devices (14) and each retention device (14) respectively has a mechanical encoding (32) through which a spatial orientation (39) of the held tag unit (12) is specified, wherein the spatial orientation (39) of the held tag unit (12) is unique for the installation position of the retention device (14) in the motor vehicle (10).

14. Motor vehicle (10) with a monitoring system (11) according to Claim 13.

## Revendications

1. Procédé (47) pour faire fonctionner un système de surveillance (11) à base radioélectrique d'un véhicule automobile (10),
- une unité de commande centrale (13) et plusieurs unités de balise (12) mobiles portables étant mises à disposition par le système de surveillance (11),
- les unités de balise (12) étant maintenues dans le véhicule automobile (10) par un dispositif de maintien (14) respectif et chaque dispositif de maintien (14) possédant respectivement un codage mécanique (32) par lequel est spécifiée une orientation dans l'espace (39) de l'unité de balise (12) maintenue, l'orientation dans l'espace (39) de l'unité de balise (12) maintenue étant caractéristique pour la position de montage du dispositif de maintien (14) dans le véhicule automobile (10), et
- chaque unité de balise (12) déterminant son orientation dans l'espace (39) et ainsi sa position propre (28) dans le véhicule automobile (10) au moyen d'un dispositif détecteur de position (42) propre et la signalant à l'unité de commande centrale (13) par voie radioélectrique (17) et
- dans un mode de surveillance (47) du système de surveillance (11), chaque unité de balise (12) acquérant de manière répétitive, au moyen d'un dispositif de mesure d'écart (38) propre, un écart (24, 26, 29) par rapport à au moins un objet (12, 26, 30) prédéterminé et le signalant à l'unité de commande centrale (13) par voie radioélectrique (17) et
- l'unité de commande centrale (13) déterminant une position d'objet (31) respective de l'au moins un objet (12, 26, 30) sur la base de la position propre (28) d'au moins une ou quelques-unes des unités de balise (12) et des écarts (24, 26, 29) respectivement signalés par cette unité de balise (12) ou ces unités de balise (12) et commandant au moins une fonction de sécurité (21) prédéterminée dans le véhicule automobile (10) en fonction de la position d'objet (31) respectivement déterminée de l'au moins un objet (12, 26, 30).

2. Procédé (47) selon la revendication 1, la position d'objet (31) d'un transpondeur d'autorisation d'accès portable du véhicule automobile (10) étant déterminée et la fonction de sécurité (21) commandée étant un système de verrouillage centralisé (20) et/ou un système antidémarrage.

3. Procédé (47) selon la revendication 2, la commande de la fonction de sécurité (21) prévoyant que le transpondeur d'autorisation d'accès, lors d'une tentative de démarrage, doit se trouver à l'intérieur du véhicule automobile (10) pour démarrer le véhicule automobile (10) et/ou, lors d'une tentative d'ouverture, dans une zone environnante prédéterminée autour du véhicule automobile (10) pour ouvrir le véhicule automobile (10).

4. Procédé (47) selon l'une des revendications précédentes, la position d'objet (31) d'un objet à protéger contre le vol hors du véhicule automobile (10), lequel possède une unité de transpondeur pour une mesure d'écart, étant déterminée et la fonction de sécurité (21) commandée étant un système d'alarme.

5. Procédé (47) selon l'une des revendications précédentes, la position d'objet (31) d'au moins l'une des unités de balise (12) étant déterminée et la fonction de sécurité (21) commandée étant un blocage de fonction d'au moins une fonction prédéterminée.

6. Procédé (47) selon la revendication 5, selon lequel, lors d'une modification de la position d'objet (31) d'un montant supérieur à une valeur de tolérance (49) prédéterminée, une fonction de déverrouillage du véhicule automobile (10) sans clé à base radioélectrique étant désactivée par le blocage de fonction.

7. Procédé (47) selon l'une des revendications précédentes, chacune des unités de balise (12) étant maintenue de manière réversible et non destructive par son dispositif de maintien (14) respectif.

8. Procédé (47) selon l'une des revendications précédentes, un état d'activité de l'unité de balise (12) respective étant commuté dans chacune des unités de balise (12) au moyen d'un capteur de mouvement propre.

9. Procédé (47) selon l'une des revendications précédentes, l'unité de balise (12) respectivement maintenue dans le dispositif de maintien (14) y étant alimentée en énergie électrique par le biais de contacts électriques (35) du dispositif de maintien (14).

10. Procédé (47) selon l'une des revendications précédentes, la position propre respective des unités de balise (12) étant déterminée et le mode de surveillance (47) étant démarré au début d'une phase de stationnement en fonction d'un signal de verrouillage qui signale une opération de verrouillage du véhicule automobile (10).

11. Procédé selon l'une des revendications précédentes, des données d'identification (18) spécifiques, respectivement univoques, pour l'unité de balise (12) respective étant utilisées comme identificateur d'émetteur lors d'un échange de données entre les unités de balise (12) d'une part et l'unité de commande (13) d'autre part, les données d'identification (18) respectives étant formées à partir de données d'identification de balise (15) univoques de l'unité de balise (12) respective et de données d'identification de véhicule (16) univoques spécifiques pour le véhicule automobile (10).

12. Procédé selon la revendication 11, les données d'identification n'étant attribuées par l'unité centrale (13) pour une unité de balise (12) respective que dans le cas où l'unité de balise (12) a acquis une orientation dans l'espace (39) qui correspond au codage mécanique (32) de l'un des dispositifs de maintien (14) et les données d'identification (18) étant effacées dans une unité de balise (12) respective lors du retrait de l'unité de balise (12) de son dispositif de maintien (14).

13. Système de surveillance (11) destiné à surveiller un véhicule automobile (10), le système de surveillance (11) comportant une unité de commande centrale (13) et plusieurs unités de balise (12) mobiles portables,
- chaque unité de balise (12) étant conçue pour, dans un mode de surveillance (47) du système de surveillance (11), acquérir de manière répétitive, au moyen d'un dispositif de mesure d'écart (38) propre, un écart (24, 26, 29) par rapport à au moins un objet (12, 26, 30) prédéterminé et le signaler à l'unité de commande centrale (13) par voie radioélectrique (17),
- l'unité de commande centrale (13) étant conçue pour déterminer une position d'objet (31) respective de l'au moins un objet (12, 26, 30) sur la base de la position propre (28) d'au moins une ou quelques-unes des unités de balise (12) et des écarts (24, 26, 29) respectivement signalés par cette unité de balise (12) ou ces unités de balise (12) et pour commander au moins une fonction de sécurité (21) prédéterminée dans le véhicule automobile (10) en fonction de la position d'objet (31) respectivement déterminée de l'au moins un objet (12, 26, 30),
- l'unité de balise (12) respective étant conçue pour déterminer son orientation dans l'espace (39) au moyen d'un dispositif détecteur de position (42) propre et pour signaler sa position propre (28) dans le véhicule automobile (10) à une unité de commande centrale (13) sur la base de l'orientation dans l'espace (39) déterminée et pour acquérir de manière répétitive, au moyen d'un dispositif de mesure d'écart (38) propre, un écart (24, 26, 29) par rapport à au moins un objet (12, 26, 30) prédéterminé et le signaler à l'unité de commande centrale (13), et
- l'unité de balise (12) respective étant maintenue dans le véhicule automobile (10) par des dispositifs de maintien (14) respectifs et chaque dispositif de maintien (14) possédant respectivement un codage mécanique (32) par lequel est spécifiée une orientation dans l'espace (39) de l'unité de balise (12) maintenue, l'orientation dans l'espace (39) de l'unité de balise (12) maintenue étant univoque pour la position de montage du dispositif de maintien (14) dans le véhicule automobile (10).

14. Véhicule automobile (10) comprenant un système de surveillance (11) selon la revendication 13.
